# EUROPÄISCHE PATENTSCHRIFT

(11) **EP 0 812 861 B1**
(45) Veröffentlichungstag und Bekanntmachung des Hinweises auf die Patenterteilung: **17.01.2001**
(21) Anmeldenummer: 97108872.9
(22) Anmeldetag: 03.06.1997
(51) Int. Cl.: C08F 10/00, C08F 4/02

(54) **Katalysatorsysteme vom Typ der Ziegler-Natta-Katalysatoren**
Catalyst system of the Ziegler-Natta type
Système catalytique du type Ziegler-Natta

(30) Priorität: 11.06.1996 DE 19623226
(43) Veröffentlichungstag der Anmeldung: 17.12.1997
(73) Patentinhaber: BASF Aktiengesellschaft, 67063 Ludwigshafen (DE)
(72) Erfinder: Hüffer, Stephan, Dr., 67071 Ludwigshafen (DE); Bidell, Wolfgang, Dr., 67112 Mutterstadt (DE); Müller, Patrik Dr., 67663 Kaiserslautern (DE); Moll, Ulrich, Dr., 67487 St Martin (DE); Hingmann, Roland, Dr., 68526 Ladenburg (DE); Schweier, Günther, Dr., 67159 Friedelsheim (DE)

(56) Entgegenhaltungen:
- EP-A- 0 034 303
- EP-A- 0 243 165
- WO-A-96/05236
- GB-A- 2 001 043
- PATENT ABSTRACTS OF JAPAN vol. 015, no. 068 (C-0807), 18.Februar 1991 & JP 02 293314 A (MITSUBISHI KASEI CORP)

## Beschreibung

Die vorliegende Erfindung betrifft Katalysatorsysteme vom Typ der Ziegler-Natta-Katalysatoren, enthaltend als aktive Bestandteile
a) eine titanhaltige Feststoffkomponente, die eine Verbindung des Titans, eine Verbindung des Magnesiums, ein Halogen, ein anorganisches Oxid als Träger und einen Carbonsäureester als Elektronendonorverbindung enthält,
   sowie als Cokatalysator
b) eine Aluminiumverbindung und
c) gegebenenfalls eine weitere Elektronendonorverbindung,
   wobei das verwendete anorganische Oxid einen pH-Wert von 1 bis 6, einen mittleren Teilchendurchmesser von 5 bis 200 µm, einen mittleren Teilchendurchmesser der Primärpartikel von 1 bis 20 µm und Hohlräume bzw. Kanäle mit einem mittleren Durchmesser von 0,1 bis 20 µm aufweist, deren makroskopischer Volumenanteil am Gesamtpartikel im Bereich von 5 bis 30 % liegt.

Außerdem betrifft die Erfindung ein Verfahren zur Herstellung derartiger Ziegler-Natta-Katalysatorsysteme und die Herstellung von Polymerisaten des Propylens mit Hilfe dieser Katalysatorsysteme.

Katalysatorsysteme vom Typ der Ziegler-Natta-Katalysatoren sind u.a. aus der EP-B 014523, der EP-A 023425, der EP-A 045975 und der EP-A 195497 bekannt. Diese Systeme werden insbesondere zur Polymerisation von C₂-C₁₀-Alk-1-enen verwendet und enthalten u.a. Verbindungen des mehrwertigen Titans, Aluminiumhalogenide und/oder -alkyle, sowie Elektronendonorverbindungen, insbesondere Siliciumverbindungen, Ether, Carbonsäureester, Ketone und Lactone, die einerseits in Verbindung mit der Titankomponente und andererseits als Cokatalysator verwendet werden.

Die Herstellung der Ziegler-Natta Katalysatoren geschieht üblicherweise in zwei Schritten. Zuerst wird die titanhaltige Feststoffkomponente hergestellt. Anschließend wird diese mit dem Cokatalysator umgesetzt. Mit Hilfe der so erhaltenen Katalysatoren wird anschließend die Polymerisation durchgeführt.

Weiterhin werden in der US-A 48 57 613 und der US-A 52 88 824 Katalysatorsysteme vom Typ der Ziegler-Natta-Katalysatoren beschrieben, die neben einer titanhaltigen Feststoffkomponente und einer Aluminiumverbindung noch organische Silanverbindungen als externe Elektronendonorverbindungen aufweisen. Die dabei erhaltenen Katalysatorsysteme zeichnen sich u.a. durch eine gute Produktivität aus und liefern Polymerisate des Propylens mit einer hohen Stereospezifität, d.h. einer hohen Isotaktizität, einem geringen Chloranteil und einer guten Morphologie, d.h. einem geringen Anteil an Feinstkorn.

Propylenpolymerisate, die mit Hilfe der in den US-A 48 57 613 und den US-A 52 88 824 beschriebenen Katalysatorsysteme erhalten wurden, weisen noch bestimmte Gehalte an xylol- und heptanlöslichen Anteilen auf, was für einige Anwendungsbereiche, beispielsweise im Lebensmittelbereich oder im Hygienesektor, ungünstig ist.

Der vorliegenden Erfindung lag daher die Aufgabe zugrunde, ausgehend von den in der US-A 48 57 613 und der US-A 52 88 824 beschriebenen Katalysatorsystemen ein verbessertes Katalysatorsystem vom Typ der Ziegler-Natta-Katalysatoren zu entwickeln, welches die obengenannten Nachteile hinsichtlich des Vorliegens von xylol- und heptanlöslichen Anteilen nicht aufweist und sich darüber hinaus durch eine hohe Produktivität und Stereospezifität der dabei erhaltenen Polymerisate auszeichnet.

Demgemäß wurden die eingangs definierten Katalysatorsysteme vom Typ der Ziegler-Natta-Katalysatoren gefunden.

Die erfindungsgemäßen Katalysatorsysteme enthalten u.a. neben einer titanhaltigen Feststoffkomponente a) noch einen Cokatalysator. Als Cokatalysator kommt dabei die Aluminiumverbindung b) in Frage. Vorzugsweise wird neben dieser Aluminiumverbindung b) als weiterer Bestandteil des Cokatalysators noch eine Elektronendonorverbindung c) eingesetzt.

Zur Herstellung der titanhaltigen Feststoffkomponente a) werden als Titanverbindungen im allgemeinen Halogenide oder Alkoholate des drei- oder vierwertigen Titans verwendet, wobei die Chloride des Titans, insbesondere Titantetrachlorid, bevorzugt sind. Die titanhaltige Feststoffkomponente enthält ferner noch einen Träger.

Weiter werden bei der Herstellung der titanhaltigen Feststoffkomponente u.a. Verbindungen des Magnesiums eingesetzt. Als solche kommen insbesondere Magnesiumhalogenide, Magnesiumalkyle und Magnesiumaryle, sowie Magnesiumalkoxy- und Magnesiumaryloxyverbindungen in Betracht, wobei bevorzugt Magnesiumdichlorid, Magnesiumdibromid und Magnesiumdi-(C₁-C₁₀-alkyl)-Verbindungen verwendet werden. Daneben kann die titanhaltige Feststoffkomponente noch Halogen, bevorzugt Chlor oder Brom, enthalten.

Ferner enthält die titanhaltige Feststoffkomponente a) noch Elektronendonorverbindungen, beispielsweise mono- oder polyfunktionelle Carbonsäuren, Carbonsäureanhydride und Carbonsäureester, ferner Ketone, Ether, Alkohole, Lactone, sowie phosphor- und siliciumorganische Verbindungen. Bevorzugt werden als Elektronendonorverbindungen innerhalb der titanhaltigen Feststoffkomponente Phthalsäurederivate der allgemeinen Formel (II) 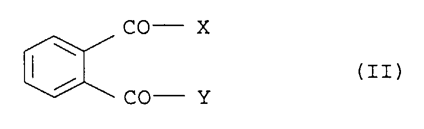 verwendet, wobei X und Y jeweils für ein Chloratom oder einen C₁- bis C₁₀-Alkoxyrest oder gemeinsam für Sauerstoff stehen. Besonders bevorzugte Elektronendonorverbindungen sind Phthalsäureester, wobei X und Y einen C₁-C₈-Alkoxyrest, beispielsweise einen Methoxy-, Ethoxy-, Propyloxy- oder einen Butyloxyrest bedeuten.

Weiter bevorzugte Elektronendonorverbindungen innerhalb der titanhaltigen Feststoffkomponente sind u.a. Diester von 3- oder 4-gliedrigen, gegebenenfalls substituierten Cycloalkyl-1,2-dicarbonsäuren, sowie Monoester von gegebenenfalls substituierten Benzophenon-2-carbonsäuren. Als Hydroxyverbindungen werden bei diesen Estern die bei Veresterungsreaktionen üblichen Alkohole verwendet, u.a. C₁-bis-C₁₅-Alkanole, C₅-bis-C₇-Cycloalkanole, die ihrerseits C₁-bis C₁₀-Alkylgruppen tragen können, ferner C₆-bis-C₁₀-Phenole.

Die titanhaltige Feststoffkomponente kann nach an sich bekannten Methoden hergestellt werden. Beispiele dafür sind u.a. in der EP-A 45 975, der EP-A 45 977, der EP-A 86 473, der EP-A 171 200, der GB-A 2 111 066, der US-A 48 57 613 und der US-A 52 88 824 beschrieben.

Bei der Herstellung der titanhaltigen Feststoffkomponente a) wird bevorzugt folgendes zweistufige Verfahren angewandt:

In der ersten Stufe versetzt man zunächst ein anorganisches Oxid, welches einen pH-Wert von 1 bis 6, einen mittleren Teilchendurchmesser von 5 bis 200 pm, insbesondere von 20 bis 70 µm, ein Porenvolumen von 0,1 bis 10 cm³/g, insbesondere von 1,0 bis 4,0 cm³/g, und eine spezifische Oberfläche von 10 bis 1000 m²/g, insbesondere von 100 bis 500 m²/g, aufweist, mit einer Lösung der magnesiumhaltigen Verbindung in einem flüssigen Alkan, wonach man dieses Gemisch 0,5 bis 5 Stunden lang bei einer Temperatur zwischen 10 und 120°C rührt. Vorzugsweise setzt man pro Mol des Trägers 0,1 bis 1 mol der Magnesiumverbindung ein. Anschließend fügt man unter ständigem Rühren ein Halogen oder einen Halogenwasserstoff, insbesondere Chlor oder Chlorwasserstoff im wenigstens zweifachen, bevorzugt im wenigstens fünffachen molaren Überschuß, bezogen auf die magnesiumhaltige Verbindung, hinzu. Nach etwa 30 bis 120 Minuten fügt man diesem Reaktionsprodukt bei einer Temperatur zwischen 10 und 150°C ein C₁- bis C₈-Alkanol, insbesondere Ethanol, ein Halogenid oder ein Alkoholat des drei- oder vierwertigen Titans, insbesondere Titantetrachlorid, sowie eine Elektronendonorverbindung hinzu. Dabei setzt man pro Mol Magnesium des aus der ersten Stufe erhaltenen Feststoffs 1 bis 5 mol des drei- oder vierwertigen Titans und 0,01 bis 1 mol, insbesondere 0,1 bis 0,5 mol, der Elektronendonorverbindung ein. Dieses Gemisch wird wenigstens 30 Minuten lang bei einer Temperatur zwischen 10 und 150°C gerührt, der so erhaltene feste Stoff anschließend abfiltriert und mit einem C₇- bis C₁₀-Alkylbenzol, bevorzugt mit Ethylbenzol, gewaschen.

In der zweiten Stufe extrahiert man den aus der ersten Stufe erhaltenen Feststoff einige Stunden lang bei Temperaturen zwischen 100 und 150°C mit überschüssigem Titantetrachlorid oder einer im Überschuß vorliegenden Lösung von Titantetrachlorid in einem inerten Lösungsmittel, vorzugsweise einem Alkylbenzol, wobei das Lösungsmittel wenigstens 5 Gew.-% Titantetrachlorid enthält. Danach wäscht man das Produkt solange mit einem flüssigen Alkan, bis der Gehalt der Waschflüssigkeit an Titantetrachlorid weniger als 2 Gew.-% beträgt.

Die auf diese Weise erhältliche titanhaltige Feststoffkomponente wird mit einem Cokatalysator, einer Aluminiumverbindung b), als Ziegler-Natta-Katalysatorsystem verwendet.

Als Cokatalysatoren geeignete Aluminiumverbindungen b) sind neben Trialkylaluminium auch solche Verbindungen, bei denen eine Alkylgruppe durch eine Alkoxygruppe oder durch ein Halogenatom, beispielsweise durch Chlor oder Brom, ersetzt ist. Bevorzugt werden Tialkylaluminiumverbindungen verwendet, deren Alkylgruppen jeweils 1 bis 8 C-Atome aufweisen, beispielsweise Trimethyl-, Triethyl- oder Methyldiethylaluminium.

Bevorzugt verwendet man neben der Aluminiumverbindung b) noch als weiteren Cokatalysator Elektronendonorverbindungen c) wie beispielsweise mono- oder polyfunktionelle Carbonsäuren, Carbonsäureanhydride und Carbonsäureester, ferner Ketone, Ether, Alkohole, Lactone, sowie phosphor- und siliciumorganische Verbindungen. Bevorzugte Elektronendonorverbindungen sind dabei siliciumorganische Verbindungen der allgemeinen Formel (I)

R¹ ₙSi(OR²)₄₋ₙ (I)

wobei
R¹ gleich oder verschieden ist und eine C₁- bis C₂₀-Alkylgruppe, eine 5- bis 7-gliedrige Cycloalkylgruppe, die ihrerseits eine C₁- bis C₁₀-Alkylgruppe tragen kann, oder eine C₆- bis C₂₀-Aryl- oder Arylalkylgruppe bedeutet, R² gleich oder verschieden ist und eine C₁- bis C₂₀-Alkylgruppe bedeutet und n für die Zahlen 1, 2 oder 3 steht. Besonders bevorzugt werden dabei solche Verbindungen, in denen R¹ eine C₁- bis C₈-Alkylgruppe oder eine 5- bis 7-gliedrige Cycloalkylgruppe, sowie R² eine C₁- bis C₄-Alkylgruppe bedeutet und n für die Zahlen 1 oder 2 steht.

Unter diesen Verbindungen sind insbesondere Dimethoxydiisopropylsilan, Dimethoxyisobutylisopropylsilan, Dimethoxydiisobutylsilan, Dimethoxydicyclopentylsilan, Dimethoxyisobutylsec.butylsilan, Dimethoxyisopropylsec. butylsilan, Diethoxydicyclopentylsilan und Diethoxyisobutylisopropylsilan hervorzuheben.

Die einzelnen Verbindungen b) sowie gegebenenfalls c) können in beliebiger Reihenfolge einzeln oder als Gemisch zweier Komponenten als Cokatalysator verwendet werden.

Erfindungsgemäß wird in der titanhaltigen Feststoffkomponente a) ein solches feinteiliges anorganisches Oxid verwendet, welches einen pH-Wert von 1 bis 6, einen mittleren Teilchendurchmesser von 5 bis 200 µm, insbesondere von 20 bis 70 µm und einen mittleren Teilchendurchmesser der Primärpartikel von 1 bis 20 µm, insbesondere von 1 bis 5 µm aufweist. Bei den sogenannten Primärpartikeln handelt es sich dabei um poröse, granuläre Oxidpartikel, welche durch Mahlung, gegebenenfalls nach entsprechender Siebung, aus einem entsprechenden Hydrogel erhalten werden. Das Hydrogel wird dabei im sauren Bereich, d.h. in einem Bereich mit einem pH-Wert zwischen 1 und 6 erzeugt, oder aber mit entsprechend sauren Waschlösungen nachbehandelt und gereinigt.

Weiterhin ist das erfindungsgemäß zu verwendende feinteilige anorganische Oxid u.a. auch noch dadurch charakterisiert, daß es Hohlräume bzw. Kanäle mit einem mittleren Durchmesser von 0,1 bis 20 µm, insbesondere von 1 bis 15 µm aufweist, deren makroskopischer Volumenanteil am Gesamtpartikel im Bereich von 5 bis 30 %, insbesondere im Bereich von 10 bis 30 % liegt. Das feinteilige anorganische Oxid weist ferner insbesondere ein Porenvolumen von 0,1 bis 10 cm³/g, bevorzugt von 1,0 bis 4,0 cm³/g und eine spezifische Oberfläche von 10 bis 1000 m²/g, bevorzugt von 100 bis 500 m²/g auf. Der pH-Wert, d.h. der negative dekadische Logarithmus der Protonenkonzentration des anorganischen Oxids liegt im Bereich von 1 bis 6, insbesondere im Bereich von 2 bis 5.

Bevorzugte anorganische Oxide sind insbesondere Oxide des Siliciums, des Aluminiums, des Titans oder eines der Metalle der I. bzw. der II. Hauptgruppe des Periodensystems. Als ganz bevorzugtes Oxid wird neben Aluminiumoxid oder Magnesiumoxid oder einem Schichtsilikat auch Kieselgel (SiO₂) verwendet, wobei dieses insbesondere durch Sprühtrocknung erhalten werden kann. Es können auch sogenannte Cogele, d.h. Gemische von zwei verschiedenen anorganischen Oxiden, eingesetzt werden.

Aufgrund der in dem feinteiligen anorganischen Oxid vorhandenen Hohlräume bzw. Kanäle liegt im Trägermaterial eine deutlich verbesserte Verteilung der Katalysatoraktivkomponenten vor. Die sauren Zentren auf der Oxidoberfläche bewirken zusätzlich eine homogenere Beladung mit den Katalysatorbestandteilen, insbesondere mit der Magnesiumverbindung. Darüber hinaus wirkt sich ein derart mit Hohlräumen und Kanälen durchzogenes Material positiv auf die diffusionskontrollierte Versorgung mit Monomeren und Cokatalysatoren und damit auch auf die Polymerisationskinetik aus. Ein solches feinteiliges anorganisches Oxid ist u.a. erhältlich durch Sprühtrocknen von vermahlenem, entsprechend gesiebten Hydrogel, welches hierzu mit Wasser oder einem aliphatischen Alkohol vermischt wird. Während der Sprühtrocknung kann der benötigte pH-Wert von 1 bis 6 auch durch die Verwendung entsprechend saurer Primärpartikelsuspensionen eingestellt werden. Ein solches feinteiliges anorganisches Oxid ist aber auch im Handel erhältlich.

Das anorganische Oxid liegt dabei innerhalb der titanhaltigen Feststoffkomponente a) vorzugsweise in solchen Mengen vor, daß auf 1 Mol des anorganischen Oxids 0,1 bis 1,0 Mol, insbesondere 0,2 bis 0,5 Mol der Verbindung des Magnesiums treffen.

Die als Cokatalysatoren wirkenden Verbindungen b) und gegebenenfalls c) kann man sowohl nacheinander als auch zusammen auf die titanhaltige Feststoffkomponente a) einwirken lassen. Üblicherweise geschieht dies bei Temperaturen von 0 bis 150°C, insbesondere von 20 bis 90°C und Drücken von 1 bis 100 bar, insbesondere von 1 bis 40 bar.

Bevorzugt werden die Cokatalysatoren b) sowie gegebenenfalls c) in einer solchen Menge eingesetzt, daß das Atomverhältnis zwischen Aluminium aus der Aluminiumverbindung und Titan aus der titanhaltigen Feststoffkomponente a) 10:1 bis 800:1, insbesondere 20:1 bis 200:1, und das Molverhältnis zwischen der Aluminiumverbindung und der als Cokatalysator eingesetzten Elektronendonorverbindung c) 1:1 bis 250:1, insbesondere 10:1 bis 80:1 beträgt.

Die erfindungsgemäßen Katalysatorsysteme werden zur Herstellung von C₂-C₁₀-Alk-1-enen verwendet. Sie eigenen sich besonders gut für die Herstellung von Polymerisaten des Propylens und des Ethylens, d.h. von entsprechenden Homopolymerisaten und Copolymerisaten dieser Monomere zusammen mit anderen C₂-C₁₀-Alk-1-enen. Dabei beträgt der Anteil der Monomere Propylen bzw. Ethylen an den Copolymerisaten mindestens 50 mol-%.

Unter der Bezeichnung C₂-C₁₀-Alk-1-ene sollen dabei u.a. Ethylen, Propylen, But-1-en, Pent-1-en, Hex-1-en, Hept-1-en oder Oct-1-en verstanden werden, wobei die Comonomere Ethylen, Propylen und But-1-en besonders bevorzugt sind.

Die erfindungsgemäßen Katalysatorsysteme können aber auch zur Herstellung von Polymerisaten anderer C₂-C₁₀-Alk-1-ene verwendet werden, beispielsweise zur Herstellung von Homo- oder Copolymerisaten des But-1-ens, des Pent-1-ens, des Hex-1-ens, des Hept-1-ens oder des Oct-1-ens.

Vorzugsweise werden mit dem erfindungsgemäßen Katalysatorsystem solche Polymerisate hergestellt, die
50 bis 100 mol-% Propylen,
0 bis 50 mol-%, insbesondere 0 bis 30 mol-% Ethylen und
0 bis 20 mol-%, insbesondere 0 bis 10 mol-% C₄- bis C₁₀-Alk-1-ene enthalten. Die Summe der mol-% ergibt stets 100.

Die Herstellung derartiger Polymerisate von C₂-C₁₀-Alk-1-enen kann in den üblichen, für die Polymerisation von C₂-C₁₀-Alk-1-enen verwendeten Reaktoren entweder absatzweise oder bevorzugt kontinuierlich u.a. als Suspensionspolymerisation oder bevorzugt als Gasphasenpolymerisation durchgeführt werden. Geeignete Reaktoren sind u.a. kontinuierlich betriebene Rührreaktoren, die ein Festbett aus feinteiligem Polymerisat enthalten, welches üblicherweise durch geeignete Rührvorrichtungen in Bewegung gehalten wird. Selbstverständlich kann die Reaktion auch in einer Reihe von mehreren, hintereinander geschalteten Reaktoren durchgeführt werden (Reaktorkaskade). Die Reaktionsdauer hängt entscheidend von den jeweils gewählten Reaktionsbedingungen ab. Sie liegt üblicherweise zwischen 0,2 und 20 Stunden, meistens zwischen 0,5 und 10 Stunden.

Die Polymerisationsreaktion wird zweckmäßigerweise bei Temperaturen von 20 bis 150°C und Drücken von 1 bis 100 bar durchgeführt. Bevorzugt sind dabei Temperaturen von 40 bis 100°C und Drücke von 10 bis 50 bar. Die Molmasse der dabei gebildeten Polyalk-1-ene kann durch Zugabe von in der Polymerisationstechnik gebräuchlichen Reglern, beispielsweise von Wasserstoff, kontrolliert und über einen weiten Bereich eingestellt werden. Weiterhin ist es möglich, inerte Lösungsmittel wie beispielsweise Toluol oder Hexan, Inertgas wie Stickstoff oder Argon und kleinere Mengen Polypropylenpulver mitzuverwenden.

Die mit Hilfe des erfindungsgemäßen Katalysatorsystems erhaltenen Propylenhomo- und -copolymerisate sind in den für Polyalk-1-ene üblichen Molmassen erhältlich, wobei Polymerisate mit Molmassen (Gewichtsmittel) zwischen 20 000 und 500 000 bevorzugt werden. Ihre Schmelzflußindizes, bei 230°C und unter einem Gewicht von 2,16 kg, nach DIN 53 735 liegen im Bereich von 0,1 bis 100 g/10 min, insbesondere im Bereich von 0,5 bis 50 g/10 min.

Das erfindungsgemäße Katalysatorsystem weist gegenüber den bisher bekannten Katalysatorsystemen eine sehr hohe Produktivität und eine verbesserte Stereospezifität, insbesondere bei Gasphasenpolymerisationen auf. Die auf diese Weise erhältlichen Polymerisate zeichnen sich auch durch eine hohe Schüttdichte, verringerte xylollösliche Anteile und einem niedrigen Restchlorgehalt aus. Weiterhin ist der heptanlösliche Anteil am Polymerisat verringert.

Aufgrund ihrer guten mechanischen Eigenschaften eignen sich die mit dem erfindungsgemäßen Katalysatorsystem hergestellten Propylenpolymerisate vor allem für die Herstellung von Folien, Fasern und Formkörpern.

### Beispiele

### Vergleichsbeispiel A

a) Herstellung der titanhaltigen Feststoffkomponente (1)
In einer ersten Stufe wurde feinteiliges Kieselgel (SiO₂), das einen Teilchendurchmesser von 20 bis 45 µm, ein Porenvolumen von 1,5 cm³/g und eine spezifische Oberfläche von 260 m²/g aufwies, mit einer Lösung von n-Butyloctylmagnesium in n-Heptan versetzt, wobei pro Mol SiO₂ 0,3 Mol der Magnesiumverbindung eingesetzt wurden. Das feinteilige Kieselgel war zusätzlich durch einen pH-Wert von 7,0, eine mittlere Teilchengröße der Primärpartikel von 3-5 µm und durch Hohlräume und Kanäle mit einem Durchmesser von 3-5 µm charakterisiert, wobei der makroskopische Volumenanteil der Hohlräume und Kanäle aus Gesamtpartikel bei etwa 15 % lag. Die Lösung wurde 30 Minuten bei 95°C gerührt, danach auf 20°C abgekühlt, wonach die 10-fache molare Menge, bezogen auf die magnesiumorganische Verbindung, an Chlorwasserstoff eingeleitet wurde. Nach 60 Minuten wurde das Reaktionsprodukt unter ständigem Rühren mit 3 Mol Ethanol pro Mol Magnesium versetzt. Dieses Gemisch wurde 0,5 Stunden bei 80°C gerührt und danach mit 7,2 Mol Titantetrachlorid und 0,5 Mol Di-n-butylphthalat, jeweils bezogen auf 1 Mol Magnesium, versetzt. Anschließend wurde 1 Stunde bei 100°C gerührt, der so erhaltene feste Stoff abfiltriert und mehrmals mit Ethylbenzol gewaschen.
Das daraus erhaltene Festprodukt extrahierte man 3 Stunden lang bei 125°C mit einer 10 vol.-%igen Lösung von Titantetrachlorid in Ethylbenzol. Danach wurde das Festprodukt durch Filtration vom Extraktionsmittel getrennt und solange mit n-Heptan gewaschen, bis das Extraktionsmittel nur noch 0,3 Gew.-% Titantetrachlorid aufwies.
Die titanhaltige Feststoffkomponente enthielt

| | |
|---|---|
| 3,5 | Gew.-% Ti |
| 7,4 | Gew.-% Mg |
| 28,2 | Gew.-% Cl. |

Die Bestimmung des Teilchendurchmessers erfolgte durch Coulter-Counter-Analyse (Korngrößenverteilung der Kieselgelpartikel), die des Porenvolumens und der spezifischen Oberfläche durch Stickstoff-Absorption nach DIN 66131 oder durch Quecksilber-Porosimetrie nach DIN 66133. Die Bestimmung der mittleren Teilchengröße der Primärpartikel, des Durchmessers der Hohlräume und Kanäle sowie deren makroskopischer Volumenanteil geschah mit der Hilfe der Scanning Electron Mikroscopy (Rasterelektronenmikroskopie) bzw. der Electron Probe Micro Analysis (Elektronenstrahl-Mikrobereichsanalyse) jeweils an Kornoberflächen und an Kornquerschnitten des Kieselgels. Der pH-Wert des Kieselgels wurde mit Hilfe der in S. R. Morrison, "The Chemical Physics of Surfaces", Plenum Press, New York [1977] auf den Seiten 130 und 131 beschriebenen Methode ermittelt.
b) Polymerisation von Propylen
Die Polymerisation wurde in einem mit einem Rührer versehenen Autoklavenreaktor mit einem Nutzvolumen von 10 l in Anwesenheit von Wasserstoff als Molekulargewichtsregler in der Gasphase durchgeführt.
In den Gasphasenreaktor wurde bei einem Druck von 28 bar und bei einer Temperatur von 70°C gasförmiges Propylen in Gegenwart von 8 Liter Wasserstoff eingeleitet. Bei einer Verweilzeit von 1,5 Stunden wurde mit Hilfe der in Beispiel 1 a beschriebenen titanhaltigen Feststoffkomponente a) polymerisiert, wobei 100 mg der titanhaltigen Feststoffkomponente a) 10 mMol Triethylaluminium und 1 mmol Dimethoxyisobutylisopropylsilan als Cokatalysator verwendet wurden.

Nach Beendigung der Gasphasenpolymerisation erhielt man ein Propylenhomopolymerisat mit einem Schmelzflußindex von 12,2 g/10 min., bei 230°C und 2,16 kg (nach DIN 53 735).

### Beispiel 1

Es wurde analog zum Vergleichsbeispiel A mit dem gleichen Katalysatorsystem und unter den gleichen Bedingungen Propylen polymerisiert, wobei aber eine solche titanhaltige Feststoffkomponente a) verwendet wurde, die auf Basis eines sauren Kieselgels mit einem pH-Wert von 3,5 und einem makroskopischen Volumenanteil der Hohlräume und Kanäle innerhalb des Gesamtpartikels von 15 % erhalten wurde.

Das granuläre Kieselgel wies folgende Eigenschaften auf:

| | |
|---|---|
| Teilchengröße der Primärpartikel | 3 bis 5 µm |
| Teilchendurchmesser | 20 bis 45 µm |
| Porenvolumen | 1,5 cm³/g |
| spezifische Oberfläche | 325 m²/g |
| Hohlräume und Kanäle am Gesamtpartikel | 15 % |

Die titanhaltige Feststoffkomponente enthielt:

| | |
|---|---|
| 3,4 | Gew.-% Ti |
| 7,5 | Gew.-% Mg |
| 28,0 | Gew.-% Cl |

### Beispiel 2

Es wurde analog zum Vergleichsbeispiel A mit dem gleichen Katalysatorsystem und unter den gleichen Bedingungen Propylen polymerisiert, wobei aber eine solche titanhaltige Feststoffkomponente a) verwendet wurde, die auf Basis eines sauren Kieselgels mit einem pH-Wert von 3,5 und einem makroskopischen Volumenanteil der Hohlräume und Kanäle innerhalb des Gesamtpartikels von 25 % erhalten wurde.

Das granuläre Kieselgel wies folgende Eigenschaften auf:

| | |
|---|---|
| Teilchengröße der Primärpartikel | 3 bis 5 µm |
| Teilchendurchmesser | 20 bis 45 µm |
| Porenvolumen | 1,6 cm³/g |
| spezifische Oberfläche | 320 m²/g |
| Hohlräume und Kanäle am Gesamtpartikel | 25 % |

Die titanhaltige Feststoffkomponente enthielt:

| | |
|---|---|
| 3,6 | Gew.-% Ti |
| 7,4 | Gew.-% Mg |
| 28,4 | Gew.-% Cl |

### Vergleichsbeispiel B

Es wurde analog zum Vergleichsbeispiel A mit dem gleichen Katalysatorsystem und unter den gleichen Bedingungen Propylen polymerisiert, wobei aber eine solche titanhaltige Feststoffkomponente a) verwendet wurde, die auf Basis eines neutralen Kieselgels mit einem pH-Wert von 7,0 und einem makroskopischen Volumenanteil der Hohlräume und Kanäle innerhalb des Gesamtpartikels von weniger als 1 % erhalten wurde.

Das granuläre Kieselgel wies folgende Eigenschaften auf:

| | |
|---|---|
| Teilchengröße der Primärpartikel | 3 bis 5 µm |
| Teilchendurchmesser | 20 bis 45 µm |
| Porenvolumen | 1,8 cm³/g |
| spezifische Oberfläche | 325 m²/g |
| Hohlräume und Kanäle am Gesamtpartikel | < 1 % |

Die titanhaltige Feststoffkomponente enthielt:

| | |
|---|---|
| 3,5 | Gew.-% Ti |
| 7,3 | Gew.-% Mg |
| 28,0 | Gew.-% Cl |

In der nachfolgenden Tabelle sind sowohl für die erfindungsgemäßen Beispiele 1 und 2 als auch für die Vergleichsbeispiele A und B die Produktivität des eingesetzten Katalysatorsystems als auch die folgenden Eigenschaften der jeweils erhaltenen Propylenhomopolymerisate aufgeführt: xylollöslicher Anteil (Maß für die Stereospezifität des Polymerisats), heptanlöslicher Anteil (Maß für die Stereospezifität des Polymerisats), Chlorgehalt, Schüttdichte, Feinstkornanteil (< 0,125 mm) und Schmelzflußindex (nach DIN 53735, bei 230°C und 2,16 kg). Weiterhin ist in der Tabelle der Anteil der Hohlräume und Kanäle innerhalb der Gesamtpartikel und der pH-Wert des Kieselgels angegeben.

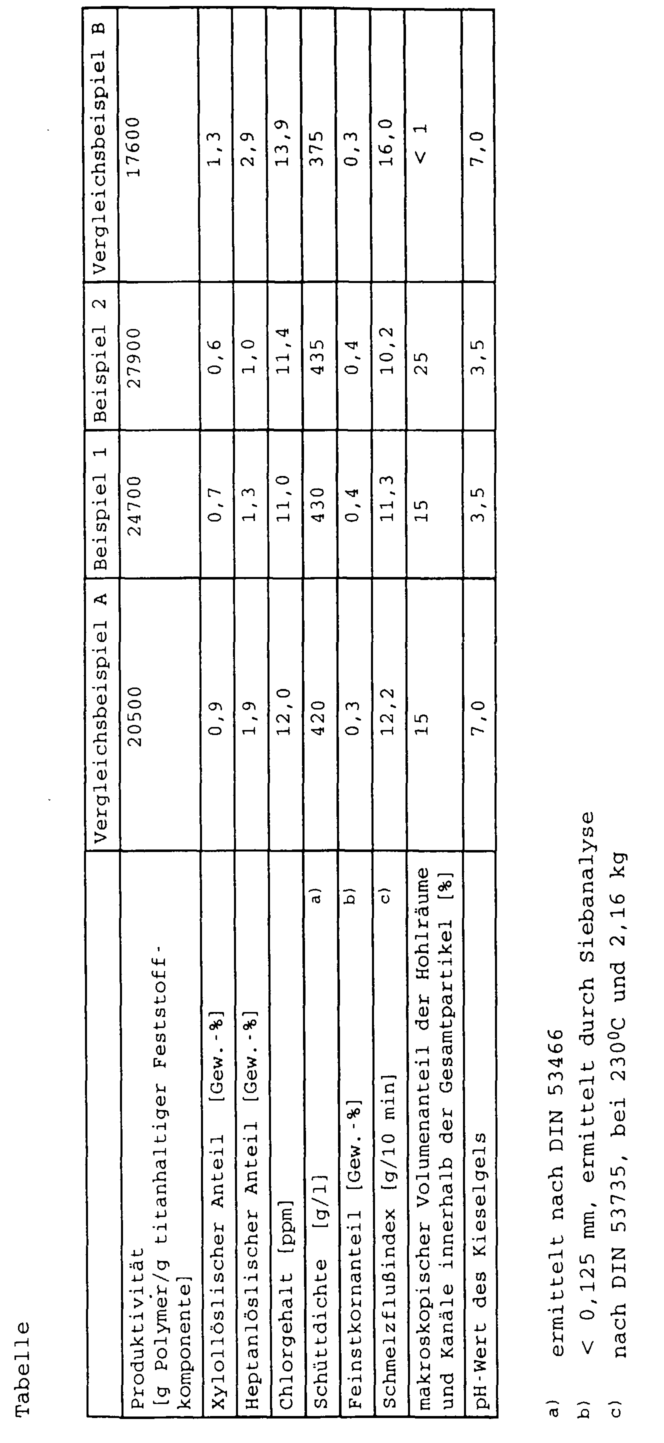

Ein Vergleich zwischen den erfindungsgemäßen Beispielen 1 und 2 und den Vergleichsbeispielen A und B macht deutlich, daß das erfindungsgemäße Katalysatorsystem eine höhere Produktivität aufweist und zu Polymerisaten des Propylens mit einer erhöhten Stereospezifität (geringere xylol- und heptanlösliche Anteile), einem verringerten Chlorgehalt und einer erhöhten Schüttdichte führt.

## Patentansprüche

1. Katalysatorsysteme vom Typ der Ziegler-Natta-Katalysatoren, enthaltend als aktive Bestandteile
a) eine titanhaltige Feststoffkomponente, die eine Verbindung des Titans, eine Verbindung des Magnesiums, ein Halogen, ein anorganisches Oxid als Träger und einen Carbonsäureester als Elektronendonorverbindung enthält,
sowie als Cokatalysator
b) eine Aluminiumverbindung und
c) gegebenenfalls eine weitere Elektronendonorverbindung,
wobei das verwendete anorganische Oxid einen pH-Wert von 1 bis 6, einen mittleren Teilchendurchmesser von 5 bis 200 µm, einen mittleren Teilchendurchmesser der Primärpartikel von 1 bis 20 µm und Hohlräume bzw. Kanäle mit einem mittleren Durchmesser von 0,1 bis 20 µm aufweist, deren makroskopischer Volumenanteil am Gesamtpartikel im Bereich von 5 bis 30 % liegt.

2. Katalysatorsysteme nach Anspruch 1, wobei das verwendete anorganische Oxid Hohlräume und Kanäle mit einem durchschnittlichen Durchmesser von 1 bis 5 µm aufweist, deren makroskopischer Volumenanteil am Gesamtpartikel im Bereich von 10 bis 30 % liegt.

3. Katalysatorsysteme nach den Ansprüchen 1 oder 2, wobei es sich bei dem anorganischen Oxid um ein Oxid des Siliciums, des Aluminiums, des Titans oder um ein Oxid eines Metalls der I. bzw. der II. Hauptgruppe des Periodensystems handelt.

4. Katalysatorsysteme nach einem der Ansprüche 1 bis 3, wobei das verwendete anorganische Oxid sprühgetrocknet ist.

5. Katalysatorsysteme nach einem der Ansprüche 1 bis 4, wobei das verwendete anorganische Oxid einen pH-Wert von 2 bis 5 aufweist.

6. Katalysatorsysteme nach einem der Ansprüche 1 bis 5, wobei als anorganisches Oxid Kieselgel (SiO₂) verwendet wird.

7. Katalysatorsysteme nach den Ansprüchen 1 bis 6, wobei als weitere Elektronendonorverbindung c) siliciumorganische Verbindungen der allgemeinen Formel (I)
R¹ ₙSi(OR²)₄₋ₙ (I)
verwendet werden, wobei R¹ gleich oder verschieden ist und eine C₁- bis C₂₀-Alkylgruppe, eine 5- bis 7-gliedrige Cycloalkylgruppe, die ihrerseits eine C₁- bis C₁₀-Alkylgruppe tragen kann, oder eine C₆- bis C₂₀-Aryl- oder Arylalkylgruppe, R² gleich oder verschieden ist und eine C₁- bis C₂₀-Alkylgruppe bedeutet und n für die Zahlen 1, 2 oder 3 steht.

8. Katalysatorsysteme nach den Ansprüchen 1 bis 7, wobei als Aluminiumverbindung b) eine Trialkylaluminiumverbindung verwendet wird, deren Alkylgruppen jeweils 1 bis 8 C-Atome aufweisen.

9. Verfahren zur Herstellung von Katalysatorsystemen gemäß den Ansprüchen 1 bis 8, dadurch gekennzeichnet, daß man die titanhaltige Feststoffkomponente a) und den Cokatalysator b) und gegebenenfalls c) bei Temperaturen von 0 bis 150°C und Drücken von 1 bis 100 bar aufeinander einwirken läßt.

10. Verfahren zur Herstellung von Polymerisaten von C₁-C₁₀-Alk-1-enen durch Polymerisation von C₂-C₁₀-Alk-1-enen und gegebenenfalls von weiteren Comonomeren bei Temperaturen von 20 bis 150°C und Drücken von 1 bis 100 bar in Gegenwart von Ziegler-Natta-Katalysatorsystemen, dadurch gekennzeichnet, daß man Katalysatorsysteme gemäß den Ansprüchen 1 bis 8 verwendet.

11. Verfahren nach Anspruch 10, dadurch gekennzeichnet, daß man als C₂-C₁₀-Alk-1-en Propylen verwendet.

## Revendications

1. Systèmes catalytiques du type des catalyseurs de Ziegler-Natta, contenant que tant que constituant actif
a) un composé solide contenant du titane, qui contient un composé de titane, un composé de magnésium, un halogène, un oxyde inorganique en tant que support et un ester d'acide carboxylique en tant que composé donneur d'électrons,
et, en tant que cocatalyseur,
b) un composé d'aluminium et
c) éventuellement un autre composé donneur d'électrons, où l'oxyde inorganique utilisé présente un pH de 1 à 6, un diamètre particulaire moyen de 5 à 200 µm, un diamètre particulaire moyen des particules primaires de 1 à 20 µm, ainsi que des pores et/ou des canaux d'un diamètre moyen de 0,1 à 20 µm, dont la fraction volumique macroscopique est de 5 à 30% du total des particules.

2. Systèmes catalytiques selon la revendication 1, où l'oxyde inorganique mis en oeuvre présente des pores et/ou des canaux d'un diamètre moyen de 1 à 5 µm, dont la fraction volumique macroscopique est de 10 à 30% par rapport au total des particules.

3. Systèmes catalytiques selon l'une des revendications 1 ou 2, où l'oxyde inorganique est un oxyde de silicium, d'aluminium, de titane, ou un oxyde d'un métal des groupes I ou Il du système périodique.

4. Systèmes catalytiques selon l'une des revendications 1 à 3, où l'oxyde inorganique utilisé est séché par pulvérisation.

5. Systèmes catalytiques selon l'une des revendications 1 à 4, où l'oxyde inorganique utilisé présente un pH de 2 à 5.

6. Systèmes catalytiques selon l'une des revendications 1 à 5, où l'on utilise du gel de silice (SiO₂) en tant qu'oxyde inorganique.

7. Systèmes catalytiques selon l'une des revendications 1 à 6, où l'on utilise cille autre composé donneur d'électrons c) des composés organosiliciques de la formule générale (I)
R¹ ₙSi(OR²)₄₋ₙ (I)
dans laquelle R¹ sont identiques ou différents et représentent un radical alkyle en C₁ à C₂₀, un radical cycloalkyle pentagonal à heptagonal, qui peut de son côté porter un radical alkyle en C₁ à C₁₀, ou un radical arylalkyle ou aryle en C₆ à C₂₀, R² sont identiques ou différents et représentent un radical alkyle en C₁ à C₂₀ et n a une valeur de 1, 2 ou 3.

8. Systèmes catalytiques selon les revendications 1 à 7, où l'on utilise en tant que composé d'aluminium b) un composé de trialkylaluminium dont les radicaux alkyle présentent à chaque fois de 1 à 8 atomes de carbone.

9. Procédé de préparation de systèmes catalytiques selon les revendications 1 à 8, caractérisé en ce que l'on fait réagir ensemble le composé solide de titane a) et le cocatalyseur b), et éventuellement c), à des températures de 0 à 150°C et des pressions de 1 à 100 bar.

10. Procédé de préparation de polymères d'alc-1-ènes en C₂ à C₁₀ par polymérisation d'alc-1-ènes en C₂ à C₁₀ et éventuellement d'autres comonomères, à des températures de 20 à 150°C et des pressions de 1 à 100 bar, en présence de systèmes catalytiques de Ziegler-Natta, caractérisé en ce que l'on utilise des systèmes catalytiques selon les revendications 1 à 8.

11. Procédé selon la revendication 10, caractérisé en ce que l'on utilise du propylène en tant qu'alc-1-ène en C₂ à C₁₀.

## Claims

1. Catalyst systems of the Ziegler-Natta type, comprising as active constituents
a) a titanium-containing solid component comprising a compound of titanium, a compound of magnesium, a halogen, an inorganic oxide as support and a carboxylic ester as electron donor compound,
and also, as cocatalyst,
b) an aluminum compound and
c) optionally a further electron donor compound,
wherein the inorganic oxide used has a pH of from 1 to 6, an average particle diameter of from 5 to 200 µm, an average primary particle diameter of from 1 to 20 µm and voids or channels having an average diameter of from 0.1 to 20 µm and a macroscopic share of the volume of the overall particle within the range from 5 to 30 %.

2. Catalyst systems as claimed in claim 1, wherein the inorganic oxide used has voids and channels having an average diameter of from 1 to 5 µm and a macroscopic share of volume of the overall particle within the range from 10 to 30 %.

3. Catalyst systems as claimed in claim 1 or 2, wherein the inorganic oxide is an oxide of silicon, of aluminum, of titanium or of a metal of main group I or II of the Periodic Table.

4. Catalyst systems as claimed in any of claims 1 to 3, wherein the inorganic oxide used is spray-dried.

5. Catalyst systems as claimed in any of claims 1 to 4, wherein the inorganic oxide used has a pH of from 2 to 5.

6. Catalyst systems as claimed in any of claims 1 to 5, wherein the inorganic oxide used is silica gel (SiO₂).

7. Catalyst systems as claimed in any of claims 1 to 6, comprising a further electron donor compound c) comprising organosilicon compounds of the general formula (I)
R¹ ₙSi(OR²)₄₋ₙ (I)
where R¹ is identical or different and represents C₁-C₂₀-alkyl, 5-, 6- or 7-membered cycloalkyl with or without C₁-C₁₀-alkyl attached to it, or C₆-C₂₀-aryl or -arylalkyl, R² is identical or different and represents C₁-C₂₀-alkyl, and n is 1, 2 or 3.

8. Catalyst systems as claimed in any of claims 1 to 7, wherein said aluminum compound b) is a trialkylaluminum compound whose alkyl groups each have from 1 to 8 carbon atoms.

9. A process for producing catalyst systems as claimed in any of claims 1 to 8, which comprises combining said titanium-containing solid component a) and said cocatalyst b) and optionally c) at from 0 to 150°C and from 1 to 100 bar.

10. A process for producing polymers of C₂-C₁₀-alk-1-enes by polymerization of C₂-C₁₀-alk-1-enes and optionally further, co-monomers at from 20 to 150°C and from 1 to 100 bar in the presence of Ziegler-Natta catalyst systems, which comprises using catalyst systems as claimed in any of claims 1 to 8.

11. A process as claimed in claim 10, wherein the C₂-C₁₀-alk-1-ene used is propylene.
